# EUROPEAN PATENT APPLICATION

(11) **EP 1 217 801 A2**
(43) Date of publication of application: **26.06.2002**
(21) Application number: 01118701.0
(22) Date of filing: 02.08.2001
(51) Int. Cl.: H04L 29/06

(54) **Home server and internet service system**

(30) Priority: 15.12.2000 JP 2000386771
(71) Applicant: Hitachi, Ltd., Chiyoda-ku, Tokyo 101-8010 (JP)
(72) Inventor: Suzuki, Shoji, Hitachi-shi, Ibaraki 316-0025 (JP); Yokohama, Takanori, Hitachi-shi, Ibaraki 319-1225 (JP)
(74) Representative: Beetz & Partner Patentanwälte

(57) **Abstract**

The invention relates to a home server (1) and an internet service system having a check means (101) for checking on registration of a telephone number accessing the home server (1) in response to a call-up to the home server (1) via a public telephone network, is provided, and an internet-connection service call function is further provided an internet service provider (7101). By using these means and function, the home server (1) accepts only a registered telephone number, and performs an internet service which has been required the call-up accepted by the check means (101).

## Description

### BACKGROUND OF THE INVENTION

The present invention relates to a home server or a home controller, and especially to; an apparatus, a system, and a method which can implement an internet-connection; having a function for preventing an unjust access to the home server or the home controller.

As an information communication device which accesses a telephone line by using a modem used mainly in a home, there are PC (Personal Computers), PDA (Personal Digital Assistances), a home server such as a set top box (hearafter referred to as a home server.) In the communication accessing a telephone line by using a modem, a home server itself calls up the internet service provider in order to connect itself to an internet. Some home server can respond a call-up sent from an external telephone.

Here, an example of a method of accessing an internet via a telephone line by using a modem is described in pages 41 and 42 of a book "All CONCERNING AN INTERNET CAN BE FIGURED OUT BY DIAGRAMMATIC EXPLANATION" by Osamu Koizumi, Nihon Jitugyoh publishing company.

In the above conventional techniques, a home server which can respond to a call-up from an external telephone, responds to all call-ups. It may give many chances of unjust accesses to the home server from the outside that the home server responds to all unspecified telephone-number calls from its outside, which in turn causes security problems. Further, since the home server cannot be connected to an internet by a remote operation, if it is required to access the home server from the outside via an internet, it is necessary to connect the home server to an internet for full-time. Thus, this increases the internet-connection charge (telephone charge), and also causes a problem in the light of security.

### SUMMARY OF THE INVENTION

The present invention is aimed at providing a function for making it possible that a home server responds to a call-up from a specific sending source, and for connecting the home

To achieve the above objective, the present invention provides a home server, which receives a requirement sent from a sending source (a calling-up person or machine) via a communication line, offers an internet service, and controls equipment connected to a home server in its own home, said home server comprising: telephone number coincidence-checking means (a unit for confirming on a registration of a telephone number corresponding to a telephone accessing the home server) for determining whether or not it can be accepted to perform a requirement sent via said communication line; modem means for said requirement, which has been accepted by said telephone number coincidence-checking means; protocol-processing means for converting said requirement; internet service-offering means for offering an internet service corresponding to said internet service-requirement converted by said protocol-processing means to said sending source; and control means for controlling equipment in said home if said internet service-requirement, which is to be offered by said internet service-offering means, needs a control process concerning said internet serve; and a service provider which receives said internet service and tries the performing of connection corresponding with the connection-requirement for said internet service, which has been required from the sending source.

### BRIEF DESCRIPTION OF THE DRAWINGS

Fig. 1 is a schematic block diagram showing the composition of a total system including a home server which can prevent an unjust access to the home sever from an external network.
Fig. 2 is a schematic block diagram showing the composition of the home server.
Fig. 3 is a schematic block diagram showing the composition of a unit for checking on registration of a telephone number corresponding to a telephone accessing the home server.
Fig. 4 is a flow chart of processing performed by the unit for checking on registration of a telephone number corresponding to a telephone accessing the home server.
Fig. 5 is a schematic block diagram showing the composition of a total system using an internet-connection call service unit.
Fig. 6 is a schematic block diagram showing the composition of the internet-connection call service unit.
Fig. 7 is a flow chart of processing performed by the internet-connection call service unit.
Fig. 8 is a schematic block diagram showing the whole composition of another system using an internet-connection call service unit.
Fig. 9 is a flow chart of an operation performed by the home server, for connecting a telephone requiring connection to an internet service provider.
Fig. 10 is a list of telephone-mail address combinations.
Fig. 11 is a schematic block diagram showing the whole composition of a home system including controllers each of which prevents an unjust access to the home server from an external network.
Fig. 12 is a schematic block diagram showing the composition of each controller.
Fig. 13 is a schematic block diagram showing the composition of each controller.
Fig. 14 is a table used by a service task-authentication program.
Fig. 15 is a schematic block diagram showing the functional composition of a business model using the internet-connection call service unit.
Fig. 16 is a schematic block diagram showing the control, which is performed for the home server, of connecting telephone lines connected to the public telephone network.

### EMBODIMENTS

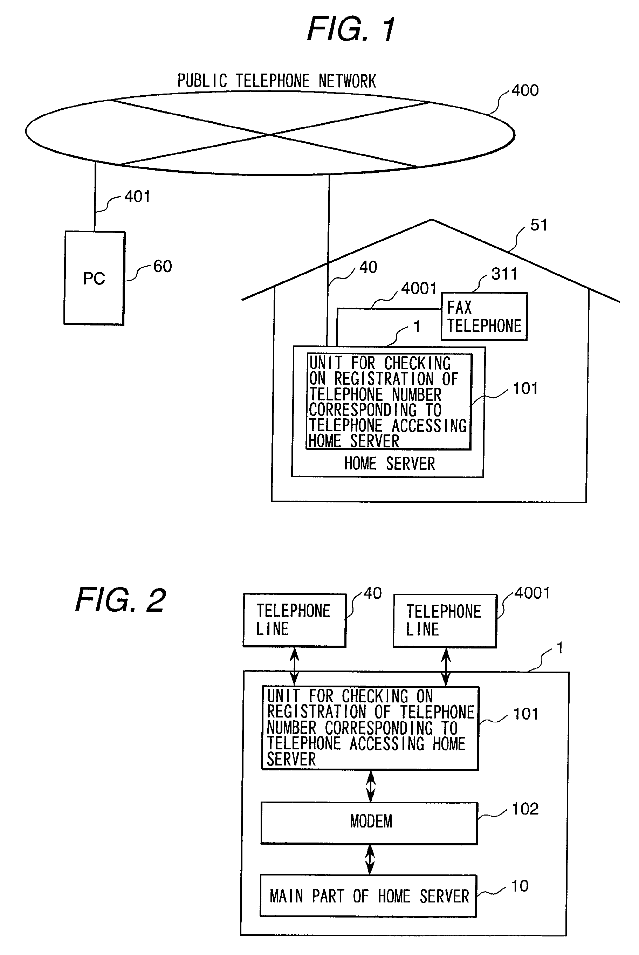

Hereafter, details of the embodiments will be explained with references to Fig. 1 - Fig. 16.

### Embodiment 1:

Fig. 1 shows the composition of a fundamental system to which the present invention is applied.

PC 60 is connected to a public telephone network via a telephone line 401. A home server 1 in a home 51 includes a unit 101 for checking on registration of a telephone number corresponding to a telephone accessing the home server 1 (telephone number coincidence-checking means.) The home server 1 is connected to the public telephone network 400 via a telephone line 40. Further, a FAX telephone 311 is connected to the public telephone network 400 via the home server 1 by using a telephone line 4001.

As the server 1, a gateway device in a home, a home controller, a set top box, etc., can be assumed.

The device 60 is not restricted to a personal computer, and will be a device which includes a modem, or in which a modem can be used. Further, a PDA (Personal Digital Assistant) and a portable telephone can also be used as the device 60. The telephone lines 40 and 4001 can be implemented by any one of radio communication and fixed-line communication. The device 311 can possess only a time-shift function, or along with a facsimile function. Further, the home 51 can be any one of a detached house, a housing complex, a facility, or an apparatus installed in the open air, such as a vending machine.

In the following, the fundamental operations of this system of the embodiment will be explained mainly with reference to Fig. 1. The PC 60 tries a connection to the home server 1 by calling-up to the telephone number of the home 51 via the route of the telephone line 40,the public telephone network 400, and the telephone line 40. The unit 101 for checking on registration of a telephone number checks whether or not the telephone number of the PC 60, which is currently accessing the home server 1, coincides with one of the registered telephone numbers, and if any registered telephone number does not coincide with the telephone number of the PC 60, the unit 101 for checking on registration of a telephone number does not respond to the call-up. Conversely, one of the registered telephone numbers coincides with the telephone number of the PC 60, the unit 101 responds to the call-up after the FAX telephone 311 responds to the call-up. Further, if the call-up indicates connection to a modem in the home server 1, the unit 101 starts the connection to the modem, and disconnects the connection to the FAX telephone 311. Conversely, if the call-up does not indicate connection to the modem in the home server 1, the unit 101 disconnects the connection to the unit 101 itself. As described above, the home server 1 can be connected to the modem only if the telephone number of the PC 60 coincides with one of the telephone numbers which have been registered in the home server 1, and the call-up from the PC 60 indicates connection to the modem.

Fig. 2 schematically shows the composition of the home server 1. The home server 1 includes the unit 101 for checking on registration of a telephone number corresponding to a telephone accessing the home server 1, the modem 102, and a central part 10 of the home server 1. Meanwhile, in this figure, since the modem 102 is shown as a typical modem having a conventional main function, the modem 102 is shown separately from the unit 101 for checking on a registration of a telephone. However, it is possible to incorporate the unit 100 function into the modem 102.

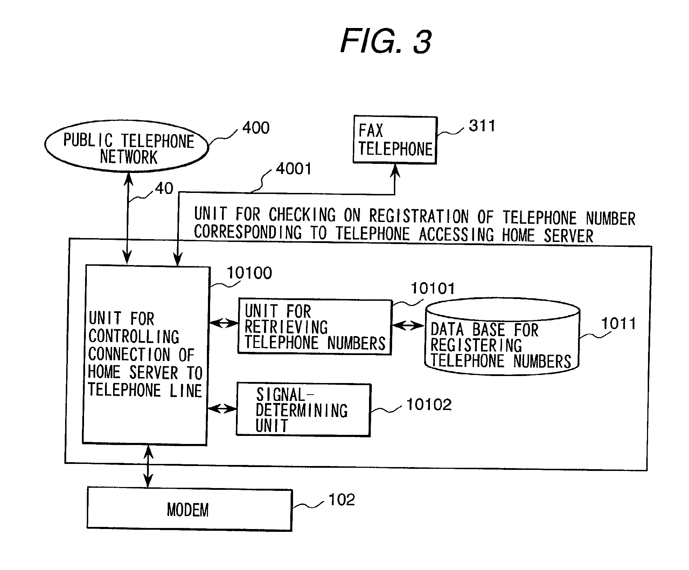

Fig. 3 schematically shows the composition of the unit 101 for checking on registration of a telephone number. A unit 10100 for controlling connection of the home server 1 to telephone lines, controls the connection among the telephone line 40 and 4001, and the modem 102. A unit 10101 for retrieving telephone numbers, compares the telephone number of the sending source with a list of the telephone numbers which have been registered in a data base 1011 for registering telephone numbers, which is used to check whether or not the telephone number of the sending source coincides with one of the telephone numbers registered in the list when the home server 1 is called up via the public telephone network 400. A signal-determining unit 10101 determines whether or not the contents of the call-up indicates a requirement of connection to the modem 102 (modem-connection requirement for data transmission, performed by the PC).

Meanwhile, the telephone lines 40 and 4001 are connected to the public telephone network 400 and the FAX telephone 311, respectively. Further, the telephone lines 40 and 4001 are connected to each other in the unit 10100 which controls the home server 1 so as to be connected telephone lines under default conditions.

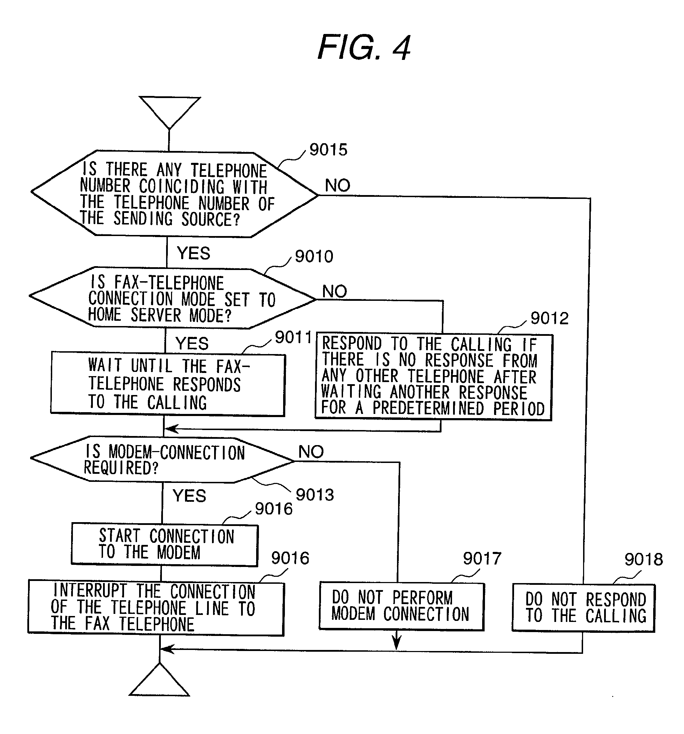

Operations of the unit 101 for checking on registration of a telephone number corresponding to a telephone accessing the home server 1 are explained below with reference to a flow chart shown in Fig. 4. In step 9015, the unit 10101 for retrieving telephone numbers compares the telephone number of the sending source with the list of the telephone numbers which have been registered in the data base 1011 for registering telephone numbers in order to check whether or not the telephone number of the sending source coincides with one of the telephone numbers recorded in the list, in response to the call-up transmitted via the public telephone network 400. If it is found that the telephone number of the sending source coincides with one of the registered telephone number, in step 9010, the unit 101 checks whether or not a FAX-telephone mode has been set to the home server mode. If the FAX-telephone mode is set to the home server mode, in step 9011, the unit 101 responds to the call-up after the unit 101 waits until the FAX telephone 311 starts responding to the call-up and becomes into a talking state, and the home server 1 also responds to the call-up. Otherwise, in step 9012, the unit 101 waits for a predetermined period, and responds to the call-up if there is no response from any other telephone. Next, in step 9013, the signal-determining unit 10102 determines whether or not the contents of the signal transmitted from the sending source indicates a requirement of connection of the home server 1 to the modem 102. If it is determined that the contents of the signal transmitted from the sending source indicates a requirement of connecting the home server 1 to the modem 102, in step 9016, the connection of the home server 1 to the modem 102 is started, and the connection of the FAX telephone 311 to the telephone line 40 is simultaneously disconnected by interrupting the connection between the telephone lines 40 and 4001 in step 9014. Conversely, If it is determined that the contents of the signal transmitted from the sending source does not indicate a requirement of connecting the home server 1 to the modem 102, the unit 101 does not perform the connection operation to the modem 102 in step 9017. Meanwhile, in step 9015, if it is determined that the telephone number of the sending source does not coincide with any one of the registered telephone number, the unit 101 does not respond to the call-up transmitted from the sending source in step 9018.

In the operation in step 9017, the telephone response of the home server1 is stopped, or will be stopped after the calling to the FAX telephone 311 is finished.

Meanwhile, the unit 10100 for controlling connection of the home server 1 to telephone lines, which is situated in the unit 101, can be implemented by using a circuit which switches connections among the telephone lines, and a control logic circuit. Also, a part or the whole of the control logic circuit can also be implemented using a control software program performed by a microcomputer. Further, the unit 10101 for retrieving telephone numbers can also be implemented using a telephone number-display function used by a telephone in which a telephone number-display service is provided by NTT (Nippon Telegraph & Telephone Corporation) is available, and a comparator for comparing a telephone number of a sending source with telephone numbers recorded in the list which has been registered in the data base 1011 for registering telephone numbers. The function of the comparator can also be implemented using a control software program performed by a microcomputer. Moreover, the signal-determining unit 10101 can be implemented by making use of a circuit portion for recognizing a signal, which is included in the modem 102.

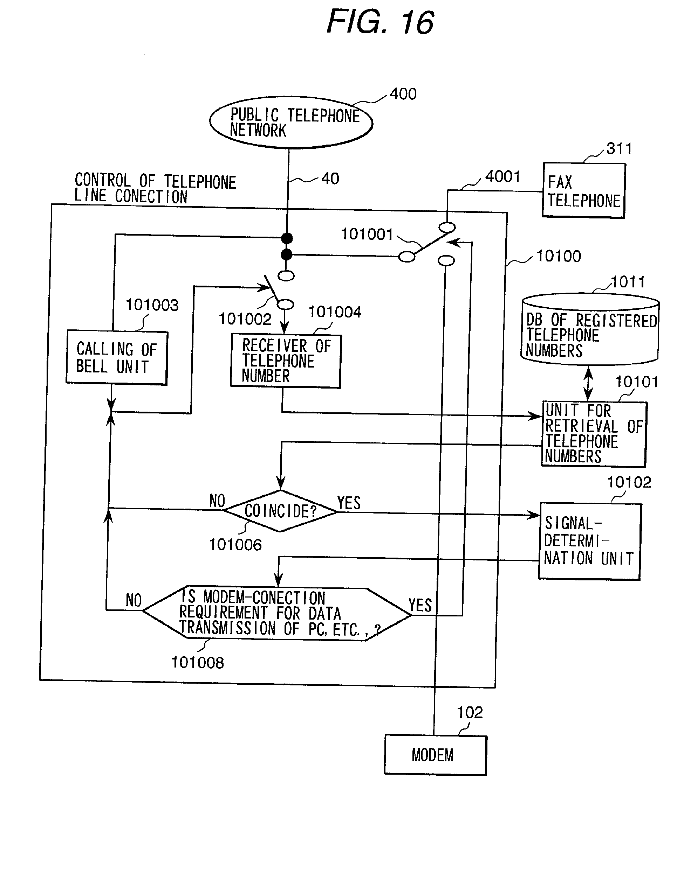

The composition and operation of the controlling device 101000 for connecting telephone lines with reference to Fig. 16. The controlling device 101000 is connected to the telephone lines 40 and 4001, the unit 10101 for retrieving telephone numbers, the signal-determination 10102, and the modem 102. Further, a switch 101001, a switch 101002, and a BELL-calling unit 101003 are connected to the telephone line 40. The switch 101001 is a switch for connecting the telephone line 40 to either the telephone line 4001 or the modem 102. In the default state, the telephone line 40 is connected to the telephone line 4001. On the other hand, the switch 101002 is a switch for connecting the telephone line 40 to a telephone number receiving module 101004, and in the default state, the telephone line 40 is disconnected from the telephone number receiving module 101004.

When a call-up is sent from a sending source to this home server, the BELL-calling unit 101003 detects the call-up, and turns on the switch 101002. The telephone number receiving module 101004 takes in the telephone number of the sending source, and sends the taken-in telephone number to the unit 10101 for retrieving telephone numbers. The unit 10101 for retrieving telephone numbers compares the telephone number of the sending source with the registered telephone numbers in the data base 1011. The result of the comparison is informed to the coincident checking device 101006. If the telephone number of the sending source coincidences any one of the registered telephone number, the coincidence checking device 101006 connects the call-up to the signal-determination unit 10102, and it is determined whether or not the contents of the call-up is a modem-connection requirement for data transmission, for example, by a PC. Conversely, if the coincidence checking device 101006 determines that the telephone number is not registered, the switch 101002 is turned off. The determination results of the signal-determination unit 10102 is processed at the processor 101008. If the call-up sent from the sending source is a modem-connection requirement for data transmission, the processor 101008 switches the connection of the switch 101001 to the connection between the telephone line 40 and the modem 102. Otherwise, the processor 101008 disconnects the telephone line 40 from the telephone number receiving module 101004.

The present invention is effective for preventing unjust connection from the outside of the home server 1, which in turn improves the security of the home server 1, by the connection-control function of the home server 1, in which a connection of the home server 1 to only a telephone whose number is registered in advance, is permitted. Further, since only a requirement of connecting the home server 1 to the modem 102, which is sent from an telephone other than telephones whose numbers are registered in advance, is not accepted, operation requirements of other devices connected to the home server 1, such as the FAX telephone, are not hindered. Meanwhile, since a telephone number is not set in telephone but in a switchboard to which a telephone is connected, it is very difficult to tamper of a telephone. Accordingly, the using of a telephone for authentication is an effective measure which improves the security of the home server 1, because it is assured that the switchboard is connected to a telephone line by which the telephone of the sending source is connected to the switchboard.

In this embodiment, although the FAX telephone 311 is connected to the telephone line 4001 connected to the home server 1, it is possible to connect the FAX telephone 311 to a telephone line installed in the home 51, situated in parallel to the telephone line 40. Also, if the FAX telephone 311 includes a FAX signal-determining means (determining of modem signals) which is the same signal-determining means of the unit 10102, it brings the same effects as those obtained by the above embodiment.

Meanwhile, in this embodiment, the analog type modem 102 is connected to the analog telephone-lines. However, the present invention can also be applied to a system in which a digital type transmission line such as ISDN is used.

### Embodiment 2:

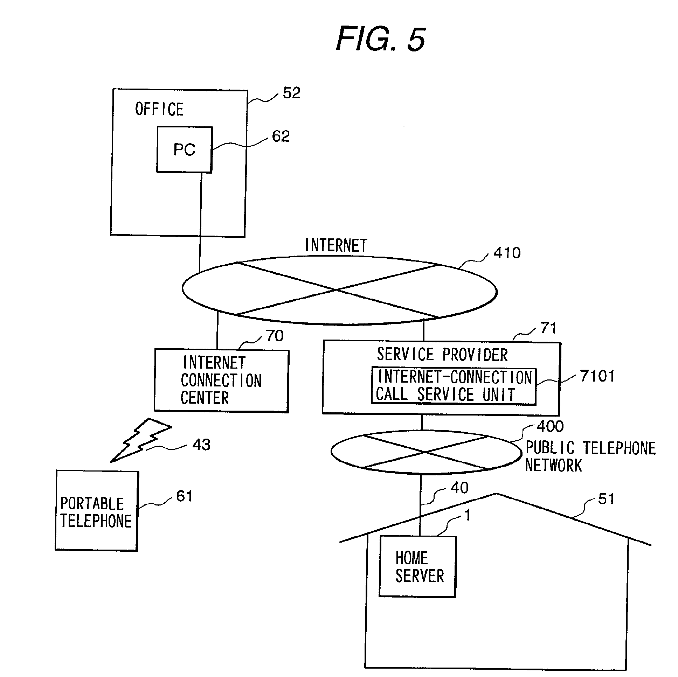

Fig. 5 schematically shows the composition of a system to which the present invention is applied.

A PC 62 in an office 52 is connected to an internet 410. The portable telephone 61 is connected to the internet 410 via a portable telephone network 43 and an internet-connection center 70 of the portable telephone 61. Further, the home server 1 in the home 51 is connected to an internet-connection service provider 71 via the telephone line 40 and the public telephone network 400. This service provider 71, which is connected to the internet 400, includes an internet-connection call service unit 7101.

The portable telephone 61 is a telephone having an internet-connection function, for example, an i-mode type portable telephone.

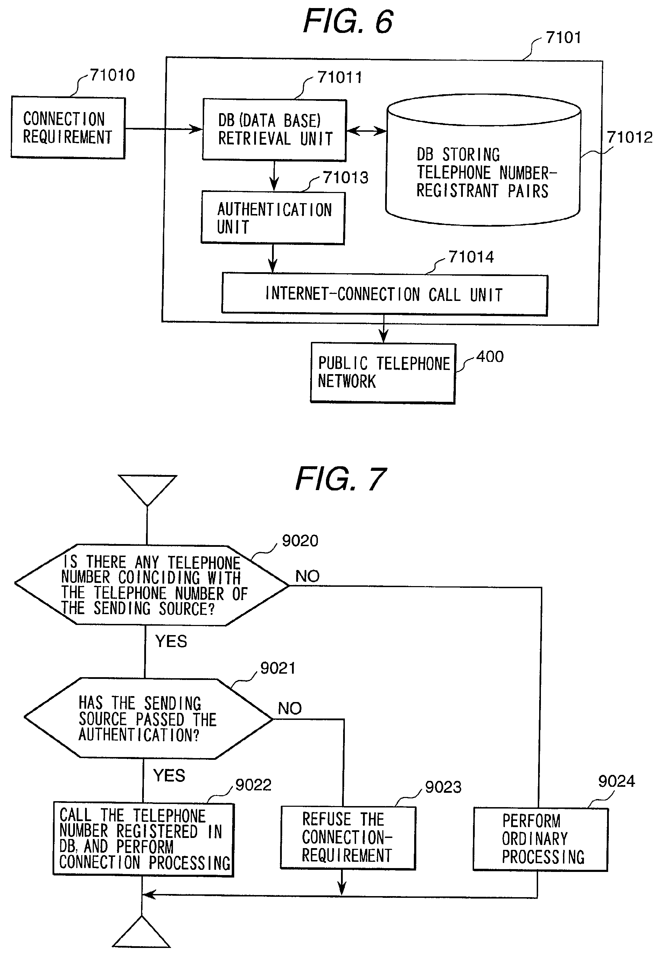

Fig. 6 schematically shows the composition of the internet-connection call service unit 7101. A DB(Data Base)-retrieval unit 10101 compares registered information with the connection requirement sent from the sending source via the internet 410. The authentication unit 71013 performs an authentication to the sending source(for example,PC62 or portable telephone in the figure), which has requested the connection requirement 71010. The internet-connection call unit 71014 connects the call from the sending source to a telephone whose number has been registered in the DB 71012 storing a list of telephone number-registrant pairs.

The connection requirement 71010 corresponds, for example, to URL (Uniform Resource Locator), that is: http://home page of service provider / a name of a registered user/ .

The authentication unit 71013 executes the authentication processing by using a pair of an input LOGIN name and an input pass word, or only an input pass word.

The internet-connection call service 7101 is explained below with reference to a flow chart shown in Fig. 7. In step 9020, the DB retrieval unit 10101 confirms whether or not the connection-requiring user (sending source) is registered, by comparing the telephone number of the sending source with the telephone number registered in the DB 701012. If the telephone number of the sending source is not registered, the internet service provider do ordinary processing in step 9024. Conversely, if the telephone number of the sending source is registered, in step 9021, the authentication unit 7103 executes authentication processing to the sending resource in step 9021. Further, if the sending resource passes the authentication, in step 9022, the internet-connection call unit 71014 connects the connection-requirement user to a telephone number registered in the DB 701012 which includes a list of telephone number - registrant pairs. Conversely, if the sending resource does not pass the authentication, the connection-requirement 71010 is refused.

As described above, the connection between the internet-connection service provider 71 and the home server 1 in the home 51 has become possible. Further, if a terminal device can be connected to an internet, the terminal device can be connected to the home server 1 from anyplace. Therefore, it is not necessary to always connect the home server 1 to an internet, which in turn can reduce a telephone line-using fee or an internet-connection service charge. Furthermore, it has become possible to reduce unjust accesses from the outside, because continuous connection of the home server 1 to an internet becomes unnecessary.

In addition, if the access target of the connection-requirement is the home server 1 in step 9022, it is possible to prevent an unjust access required from the outside and improve the security of the home server 1, by connecting only a telephone, whose number is registered, to the home server 1, and not connecting a telephone, whose number is not registered, to the home server 1.

Even if the internet-connection call service 7101 does not include the authentication unit 71013, the service from the internet-connection service provider 71 to the home server 1 in the home 51 is possible. However, all PC sources, who knows the registered members, can try to access the home server 1 via an internet to which the home server 1 is connected. This causes the deterioration in the security of the home server 1, and frequent connection to the home server 1.

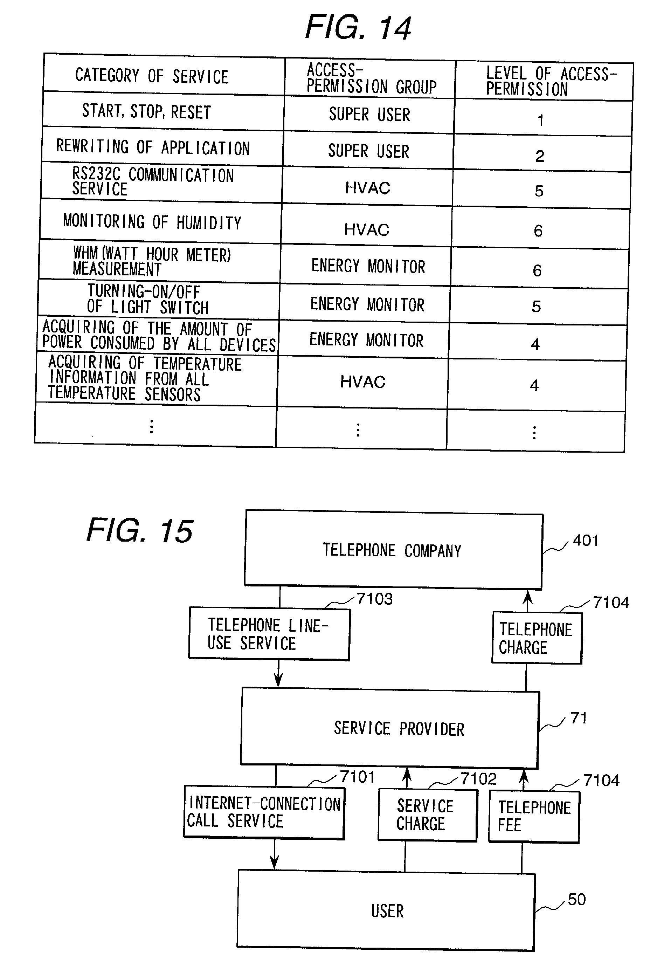

Fig. 15 shows a business model using the embodiment shown in Fig. 5, in which the service provider offers an internet-connection call service. The service provider 71 offers the internet-connection service 7101, and tolls (service charge 7102 + consumed telephone fee 7104) from the user 50. Further, the service provider receives telephone line use services 7103 from a telephone company 401, which are used for telephone connection services to the home server 1, and pays the service charge to the telephone company 400 in the telephone charge 7104. The collection method of service charge 7102 is performed, for example, by determining a connection service charge for one time in advance, and automatically calculating total service charge based on times of services offered in a month. Or, it is possible that one month service charge is fixed to a constant charge. Moreover, is also possible that the basic service charge is constant within predetermined service times, and if the times of services exceed the predetermined service times, the charge proportional to the excess service times from the predetermined service times is added to the basic service charge. Furthermore, the service provider creates a bill for each user every month, indicates it to him, and collect the service charge of each user. Moreover, the charge in each month is recorded.

Meanwhile, in the pay flow of the telephone fee, it is possible that the user 50 directly pay the fee to the telephone company not through the service provider 71.

Also, the telephone company 400 can execute a business of communication connection services. Moreover, the user 50 is not restricted to an individual, and the user 50 can be a legal entity.

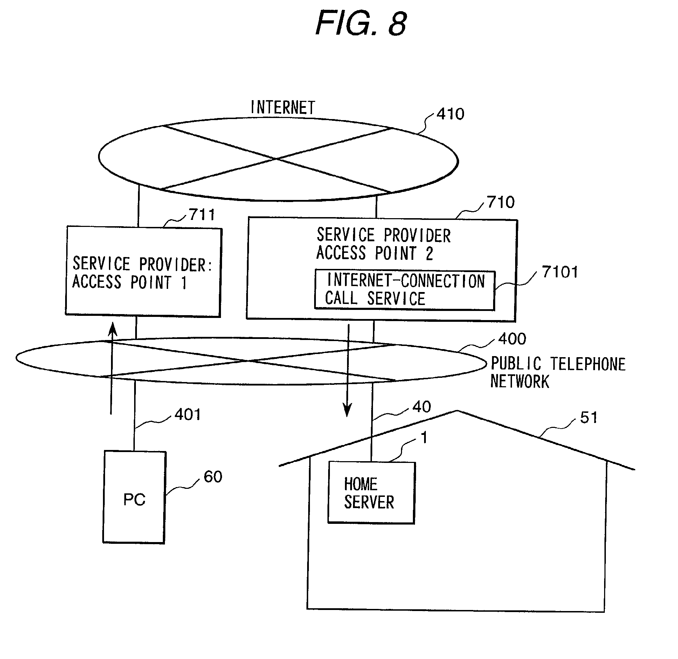

Fig. 8 shows an application example of the embodiment shown in Fig. 5.

The PC 60 is connected to the internet 410 via the access point 1 (711) in the route of the telephone line 401, the public telephone network 400, and the internet service provider. The home server 1 in the home 51i is connected to the access point 2 (710) via the telephone line 40, and the public telephone network 400. This access point 710 is connected to the internet 410, and includes an internet-connection call service unit 7101.

In the composition shown in Fig. 8, a connection-requirement 71010 (refer to Fig. 6) to the internet-connection call service 710 via the internet 410 is restricted to a connection-requirement sent from the access point which is controlled by this service provider. This restriction can be implemented by confirming IP(Internet Protocol address) of the sending source. By this restriction function, it has become easy to prevent an unjust access to the home server 1 from the outside of the control area managed by this service provider, which in turn can improve the security of the home server 1.

### Embodiment 3:

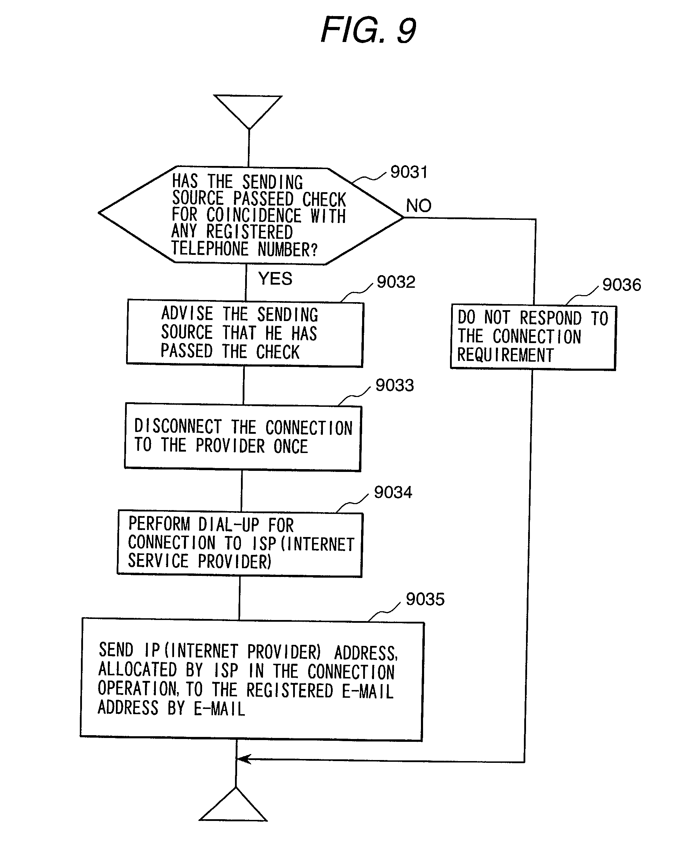

Fig. 9 shows a flow chart of internet-connection procedures in which the home server 1 is connected to a conventional internet service provider without the internet-connection call service unit 7101, which has been explained in the previous embodiment.

In the system composed in the embodiment, which is shown in Fig. 1, at first, in step 9031, the PC 60 tries an access to the home server 1 by calling -up the telephone number of the home 51 via the telephone line 40, the public telephone network 400, and the telephone line 40. Further, it is checked whether or not the telephone number of PC 60 coincides with any telephone number registered by the unit 101 for checking on registration of telephone number corresponding to telephone accessing the home server 1. If the coincidence is confirmed, in step 9032, the home server 1 advises the sending sources that a coincidence test has passed, and interrupts the connection to the sending source once. Consequently, in step 9034, the home server 1 connects to the internet service provider (ISP) by means of dial-up internet protocol (IP) connection. When the internet protocol (IP) connection is executed, in step 9035, the IP address allocated by the internet service provider is sent to the e-mail address of the sending source by e-mail, which is registered in the home server 1. Meanwhile, in step 9031, if the telephone number of the sending source does not pass the coincidence test, the home server 1 does not respond to the call-up sent from the PC 60.

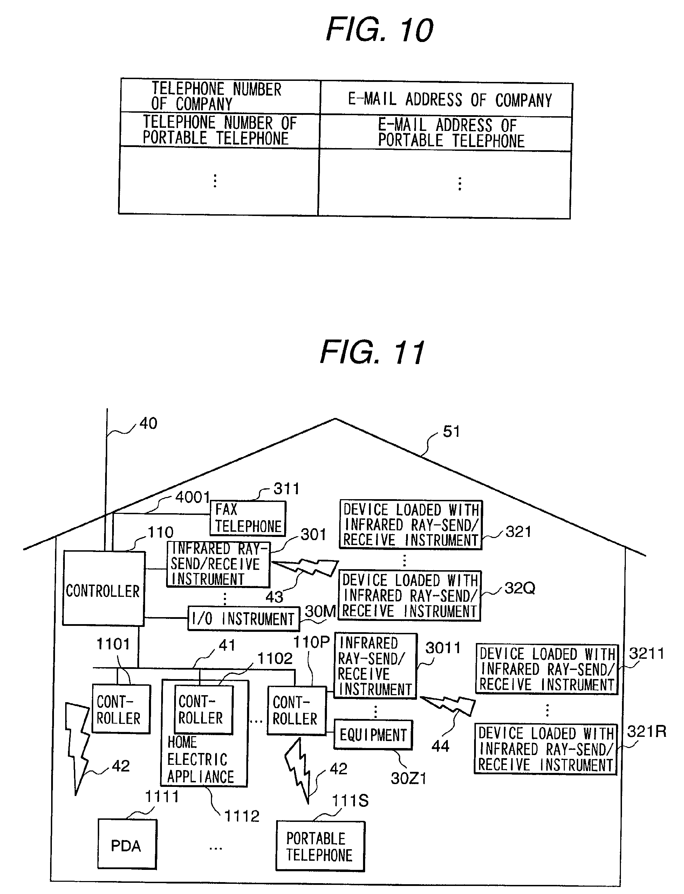

Selection of the e-mail address in step 9035 is possible by providing a list of telephone number of sending source - e-mail address pair, such as that shown in Fig. 10, in the home server 1.

Also, in step 9031, it is possible that the home server 1 does not use the unit 101 for checking on registration of a telephone number corresponding to the telephone accessing the home server 1, and alternatively, it is possible to checks a pass word sent from PC.

### Embodiment 4:

Fig. 11 shows an application example of the home server 1 and its system composition. A controller 110 is an application example of the home sever 1, and is connected to the public telephone network via the telephone line 40. Also, the controller 110 is connected to the FAX telephone 311 via the telephone line 4001. Various kinds of I/O devices 301 - 30M (M is positive integer) are connected to the controller 110. The controller 110 is further connected to the network 41, and the network are also other controllers 1101 - 110P (P is positive integer). Further, the controller group 1101 - 110P can communicate with the controller 110. Furthermore, the controllers 110, and 1101 - 110P are connected to various kinds of net devices by a wireless network.

In this embodiment, the I/O devices such as infrared ray send/receive devices 301 and 3011 are connected to the controllers 110 and 110p. Moreover, infrared ray device-mounting components 321 - 32Q (Q is positive integer) are connected to each other by an infrared ray signal 43 network. Also, infrared ray device-mounting components 3211 - 321R (R is positive integer) are also connected to each other by an infrared ray signal 44 network. In addition, operations of respective group of the infrared send/receive components are controlled by a corresponding controller 110 or 110P.

Further, in this embodiment, the controller 1102 is incorporated into the household electrical appliance 1112.

The I/O devices 301 - 30M (M is positive integer), such as an infrared ray sending device, an infrared ray receive device, a thermometer, a humidity indicator, a speaker, a microphone, an inverter, a household electrical appliance, etc. are to be controlled or monitored.

The network devices 1111 - 111S (S is positive integer) are, for example, PDA (Personal Digital Assistances), a portable telephone, a network household electrical appliance, and so on.

The network 41 can be created by a network using telephone lines as typified by Ethernet or HomePNA, or a network using lighting lines as typified by HomePlug. The wireless network 42 can also be implemented by Bluetooth, Home RF, IEEE802.11, etc.

In the system composition shown in Fig. 11, various kinds of components in the home 51 can be controlled by control instructions input from the outside via the telephone line 40. On the other hand, information on operations of the components in the home 11 can be transmitted to external terminals via the telephone line 40.

Fig. 11 shows the composition of the controller 110. The controller 110 includes the unit 101 for checking on registration of a telephone number corresponding to a telephone accessing the home server 1, the modem 102, and the central part 10 of the controller.

The telephone lines 40 and 401 are connected to the unit 101 for checking on registration of a telephone number corresponding to a telephone accessing the home server 1, and the LANs 41 and 42 are connected to the LAN controllers 1021 and 1022. Further, the I/O devices 301 and 30M (M is positive integer) are connected to the I/O resource 105. The central part 10 includes a CPU core 103, an OS kernel 104,the I/O resource 105 such as a digital input/output device, an analog input/output device, a serial port typified by RS232C, etc., a LAN controllers 1021 and 1022, and various kinds of program groups which are executed by the CPU core 103.

Various kinds of program groups includes a modem driver 201, a PPP (Point-to-Point Protocol) 202, a PPP authentication program 2021, a TCP (Transmission control program)/ IP (Internet Protocol), an application program-authentication program 205, application programs 2041 - 204L (L is positive integer), a service task-authentication program 206, various types of service tasks 2071 - 207N, and 2081 - 208k (N and K are positive integers), protocol stacks 2031 and 2032, and LAN drivers 2011 and 2012.

In this example shown in this figure, a WEB server 2041, a mail-sending program 2042, an application-control program 2043, a program 204L for monitoring application programs, are loaded. The service tasks 2071 - 207n perform the processing of input information to and output information from the various kinds of devices connected to the I/O resource 5. The service tasks 2081 - 208K monitor and control the units connected to the LANs 41 and 42. Further, the service task 2081 monitors and controls units connected to the LAN 41 via the protocol stacks 2031 and the LAN driver 2011. Further, the service task 208K monitors and controls units connected to the LAN 42 via the protocol stack 2032 and the LAN driver 2012 (for example, the ON/OFF controlling, or operation states of household electric appliances connected to LAN 42 shown in Fig. 1.) Meanwhile, the protocol stack 2031 is a TCP/IP stack.

The PPP authentication unit 2021 is an authentication service-implementing program using a LOGIN name and a pass word, and a user using the a remote terminal, who intends to access the controller 110 via the telephone line 40, cannot access the controller 110 if the sending source (the user) is not permitted by the authentication program. Further, the application program-authentication program 205 executes the authentication of performing each application program, and only an application program permitted by the application program-authentication program 205 can be performed. The service task-authentication program 206 executes the authentication of performing each of the service tasks 2071 - 207N, and 2081 - 208K, and only a service task permitted by the service task-authentication program 206 can be executed.

Fig, 14 shows an example of the table used by the service task-authentication program 206. In the table, for each service task, access permitted groups, and priority level of each permitted task, are listed up. Moreover, a class level of each service task group and its priority level are allocated to each user ID. If a service task which a user intends to use exists in the allocated class of service task group, the user can use the service task. Otherwise, if the priority level of the wanted service task is lower than the currently permitted priority level, the wanted service task can be used (Meanwhile, in this embodiment, a low level number indicates a high priority.) A sending source other than the above permitted users cannot receive any service provided in the home 51. Moreover, the service task-authentication program 206 can be implemented by using only the class level of each service task group, or using only priority level of each service task.

A method of the application program-authentication 205 is similar to that of the service task-authentication 206. That is, the application program-authentication 205 executes the authentication function by using the class level of each application group and its priority level of each application program.

As described above, since four authentication stages of checking on registration of the telephone number of the sending source, the PPP authentication, the application program-authentication, and the task service-authentication, are provided in the controller 110, an unjust access to the home server 1 from the outside can be prevented, which in turn can compose a network system in a home, whose security is remarkably improved.

Meanwhile, it is possible to compose a network system without one or more authentication functions in the above four functions.

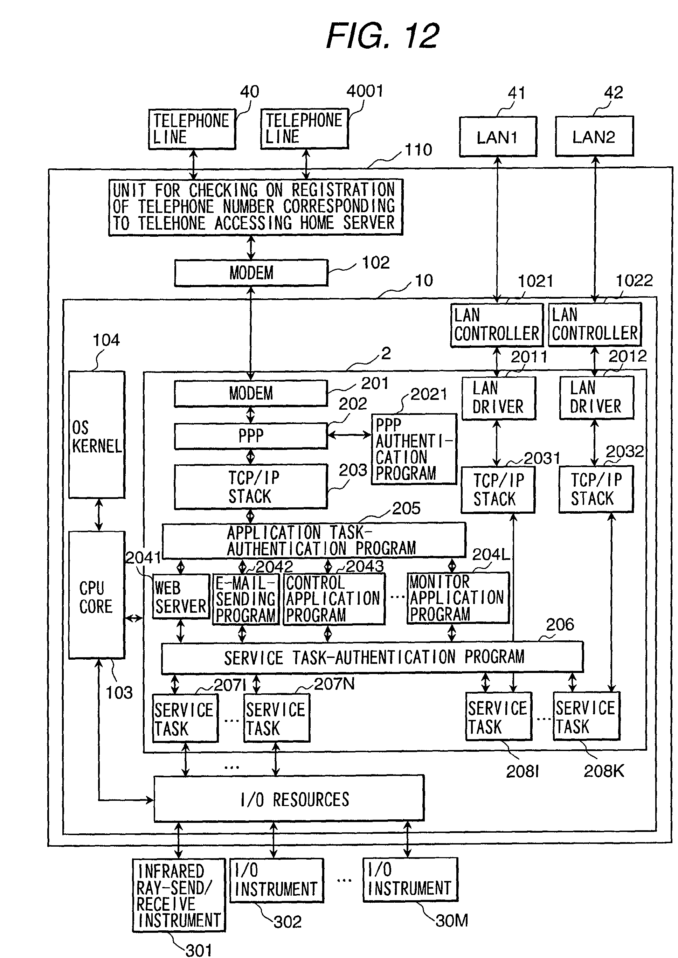

Further, although the two kinds of the LANs 41 and 42 are connected to the controller 110 in Fig. 12, one or both of the LANs can be removed. Naturally, lANs connected to the controller are not restricted to the two kinds of LAN 41 and LAN 42, and it is possible to connect more than two kinds

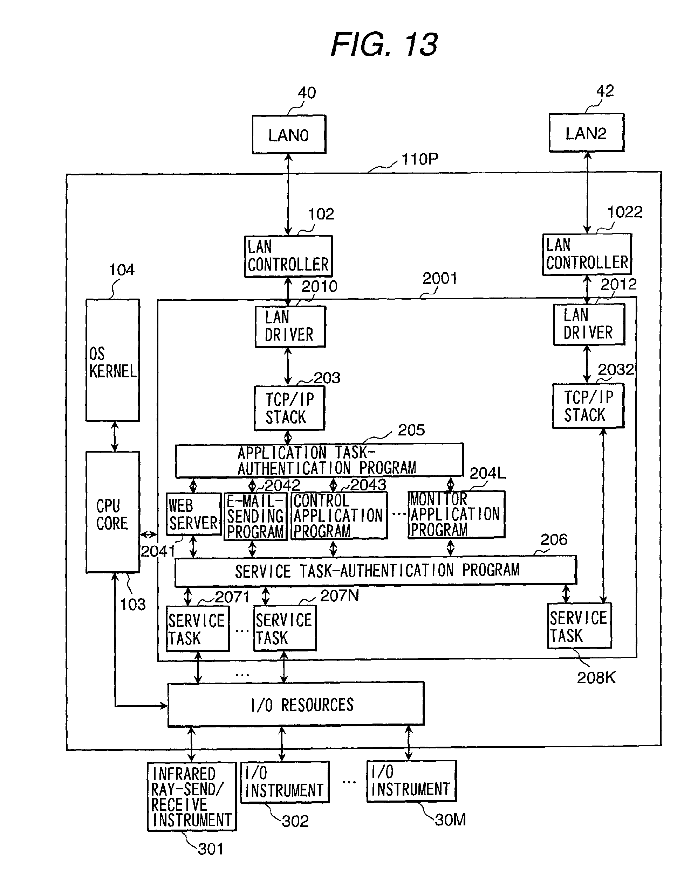

Fig. 13 shows the composition of the controller 1101. This composition is a typical example of the controllers 1101, 1102, ... 110P. The controller 1101 is composed; by removing the unit 101 for checking on registration of a telephone number corresponding to a telephone accessing the home server 1, the modem 102, the PPP 202, the PPP-authentication program 2021, from the composition of the controller 110, and by adding the LAN controller 1020, and the LAN driver 2010. The controller 1101 can prevent an unjust access to the resource in the controller by using two stage authentication services performed by application program-authentication program and the service task-authentication program, and this makes it possible to compose a network system for a home, which has a greatly improved security.

In accordance with the present invention, since the unit 101, which is included in the home server 1, for checking on registration of a telephone number corresponding a telephone accessing to the home server 1 connects a call-up of only a registered telephone number an unjust connection to the home server 1 from the outside can be prevented, the security of the home server 1 can be greatly improved.

Furthermore, only at a necessary time, it has become possible to connect a dial-up IP to the home server 1 from the internet-connection service provider 71. Therefore, it is not necessary to always connect the home server 1 to an internet-connection service provider, which in turn can reduce the telephone line-using fee and the internet-connection service charge. In addition, this can remarkably reduce the higher probability of that unjust accesses to the home server 1 from the outside due to continuous connection to the internet-connection provider.

## Claims

1. A home server, which receives a requirement sent from a sending source (a calling-up person or machine) via a communication line, offers an internet service, and controls equipment connected to a home server (1) in its own home (51), said home server (1) comprising:
telephone number coincidence-checking means (101) for determining whether or not it can be accepted to perform said requirement sent from the sending source;
modem means (102) for receiving said requirement, which has been accepted by said telephone number coincidence-checking means (101);
protocol-processing means for converting a signal of said requirement to an internet service; internet service-offering means for offering said internet service corresponding to said requirement to said sending source, which has been converted by said protocol-processing means; and
control means (110) for controlling equipment in said home (51) if said internet service, which is to be offered by said internet service-offering means, needs a control process concerning said internet service.

2. A home server, which receives a requirement sent from a sending source via a communication line, offers an internet service, and controls equipment connected to a home server (1) in its own home (51), said home server (1) comprising:
telephone number coincidence-checking means (101) for determining whether or not it can be accepted to perform said requirement sent from the sending source;
modem means (102) for receiving said requirement, which has been accepted by said telephone number coincidence-checking means (101);
protocol-processing means for converting a signal of said requirement to an internet service; and
internet service-offering means for offering said internet service corresponding to said requirement to said sending source, which has been converted by said protocol-processing means.

3. A home server, which receives a requirement sent from a sending source via a communication line, offers an internet service, and controls equipment connected to a home server (1) in its own home (51), said home server (1) comprising:
telephone number coincidence-checking means (101) for determining whether or not it can be accepted to perform said requirement sent from the sending source;
modem means (102) for receiving said requirement, which has been accepted by said telephone number coincidence-checking means (101); and
protocol-processing means for converting a signal of said requirement to an internet service.

4. A home server, which receives a requirement sent from a sending source via a communication line, offers an internet service, and controls equipment connected to a home server (1) in its own home (51), said home server (1) comprising:
telephone number coincidence-checking means (101) for determining whether or not it can be accepted to perform said requirement sent from the sending source; and
modem means (102) for receiving said requirement, which has been accepted by said telephone number coincidence-checking means (101).

5. A home server, which receives a requirement sent from a sending source via a communication line, offers an internet service, and controls equipment connected to a home server (1) in its own home (51), said home server (1) comprising:
modem means (102) for receiving a requirement, which has been accepted by telephone number coincidence-checking means (101);
protocol-processing means for converting a signal of said requirement to an internet service; and
internet service-offering means for offering an internet service corresponding to said requirement to said sending source, which has been converted by said protocol-processing means.

6. An internet service system comprising:
an information terminal for requiring an internet service;
a communication line for transiting said internet service; and
a home server (1) according to claim 1, for receiving said transmitted internet service;
wherein said internet service can be implemented by said information terminal.

7. An internet service system comprising:
an internet (410) for transmitting an internet service required from a sending source;
a service provider (71) which receives said internet service from said internet (410), and implements said connection between said sending source and a receiving destination to which said sending source intends to connect;
an communication line for transmitting said internet service; and
a home server (1) according to claim 1, which receives said sent internet service;
wherein said internet service can be implemented from said internet (410).
